# EUROPEAN PATENT APPLICATION

(11) **EP 4 507 312 A1**
(43) Date of publication of application: **12.02.2025**
(21) Application number: 24193795.2
(22) Date of filing: 09.08.2024
(51) Int. Cl.: H04N 21/2343, H04N 21/2387, H04N 21/845

(54) **INTER-SEGMENT LADDER TRANSITIONING IN ADAPTIVE STREAMING**

(30) Priority: 10.08.2023 US 202318447818
(71) Applicant: Comcast Cable Communications LLC, Philadelphia, Pennsylvania 19103 (US)
(72) Inventor: GILADI, Alex, Philadelphia, 19103 (US)
(74) Representative: V.O.

(57) **Abstract**

Methods and systems are described for encoding, delivering, and playing streaming content. A plurality of representations may be generated for a content asset. The plurality of representations may have segments encoded according to different segment durations, distortion, or computational costs. A media device may transition between representations to perform a content transition operation.

## Description

### BACKGROUND

Content delivery systems typically group media segments into representations that include content encoded at a given bitrate or quality. Segments from different representations are typically time-aligned to enable switching across representations at any segment boundary. In certain scenarios, this approach results in latency performance problems. Streaming can only start, for example, at a segment boundary, and a complete segment must be generated and transmitted to start streaming at the segment boundary, resulting in unnecessary delays in delivery of content. Thus, there is a need for more sophisticated techniques for content delivery.

### SUMMARY

Disclosed herein are techniques for performing content transitions from one representation of content comprising content segments of a length (e.g., number of bits, time length) to another representation of the content containing content segments of a different length.

A media device may need to transition at a point other than a segment boundary or may be unable to find a representation that has a segment beginning at the same time as a transition operation. Accordingly, a transition operation may take place at some point within a segment (e.g., an inter-segment content transition). Since frames typically reference earlier frames, one or more leading frames (e.g., a prior frame referenced for decoding a frame) of the segment that is being transitioned from at an inter-segment transition may be different than one or more leading frames of the segment that is being transitioned to. Depending on the encoding type, the differences in the leading frames of the respective content segments may create performance issues, such as latency or visual errors, when played by a media player.

To minimize the performance issues associated with inter-segment content transitions, a joint encoding process may be used. The joint encoding process may comprise encoding multiple representations of the same content, with at least a portion of the representations having content segments with shorter segment lengths than others. An encoder performing joint encoding may allow encoding of representations with shorter segment lengths to access encoded and reconstructed frames from representations with longer segment lengths. A rate distortion optimization function may be used in the encoding process to minimize the differences between the reference frames of the different representations. The rate distortion optimization function may configure an encoder to encode the reference frames of the different representations to be closer to each other by minimizing the differences between reference frames of the different representations. Accordingly, errors may be minimized when an inter-segment content transition occurs (e.g., at a content player) and a frame from a different representation is referenced to continue the decoding process in a different representation.

This Summary is provided to introduce a selection of concepts in a simplified form that are further described below in the Detailed Description. This Summary is not intended to identify key features or essential features of the claimed subject matter, nor is it intended to be used to limit the scope of the claimed subject matter. Furthermore, the claimed subject matter is not limited to limitations that solve any or all disadvantages noted in any part of this disclosure.

Additional advantages will be set forth in part in the description which follows or may be learned by practice. It is to be understood that both the foregoing general description and the following detailed description are exemplary and explanatory only and are not restrictive.

### BRIEF DESCRIPTION OF THE DRAWINGS

The accompanying drawings, which are incorporated in and constitute a part of this specification, illustrate embodiments and together with the description, serve to explain the principles of the methods and systems.
FIG. 1 shows an example of a transition between content representations.
FIG. 2A shows an example of a bitstream.
FIG. 2B shows an example of a decoded picture buffer.
FIG. 3 shows an example of error propagation associated with an inter-segment transition.
FIG. 4A shows an example of a rate distortion optimization function.
FIG. 4B shows additional examples of a rate distortion optimization function.
FIG. 5 shows an example of a hierarchical data model.
FIG. 6 shows an example of a media player.
FIG. 7 shows an example system for adaptive streaming of content.
FIG. 8 shows an example method for encoding streaming content.
FIG. 9 shows an example method for delivering streaming content.
FIG. 10 shows an example method for streaming content.
FIG. 11 shows an example method for playing streaming content.
FIG. 12 is a block diagram illustrating an example computing device.

### DETAILED DESCRIPTION OF ILLUSTRATIVE EMBODIMENTS

Disclosed herein are methods and systems for content (e.g., video, audio) encoding, storage, transmission, and playback. Content, such as video and/or audio, may be encoded into a plurality of representations (e.g., or versions). These representations may have different features and/or purposes. For example, a representation may be used for a particular playback mode. Representations may also be used to allow for more efficient transition operations, such as when a user changes a channel or content transitions to an advertisement.

The content segments of different representations may not always match. For example, one representation may have longer content segments than other representations, resulting in the endpoints of content segments not matching. In conventional devices, playback errors may result if the content player transitions from a first representation to a second representation within a content segment of the second representation. These playback errors may result because a content segment typically has frames within it that refer to prior frames in the same content segment. Selecting one of the frames between the segment boundaries (e.g., mid-segment) from the switched to second representation as the first frame to decode may result in an error because an encoder may not have received the reference frame needed to decode the frame (e.g., reference frames are typically at a segment boundary instead of mid-segment). Instead, an encoder attempting to decode a frame in a second representation may have a reference frame for the first representation in its memory. Differences in these references from the first to the second representation may result in errors and potentially failure to decode the frame.

The present techniques may reduce these errors by using joint encoding and/or rate distortion optimization techniques to encode the different representations in such a way that the differences between the reference frames of the different representations are minimized. Joint encoding may configure an encoder to be able to compare frames or portions of frames between representations (e.g., primary representation to secondary representation) being encoded from source content to determine distortion between the representations to allow the encoder to optimize encoding of the representations by minimization the distortion.

As an example, a content item, such as a show, movie, and/or the like may be encoded into different representations. The different representations may include a primary representation and one or more secondary representation(s). A primary representation may be created for normal playback of a show, as well as one or more secondary representations for alternate playback. Each representation may include multiple content segments (e.g., corresponding to the same content). For example, the content segments of secondary representation(s) may be shorter than the content segments of the primary representation. The use of representations with content segments of differing lengths may allow for faster transition operations. For example, if a user changes a channel at some point within a content segment for the main representation, a different representation with content segment beginning sooner than the main content segment may be initially used to start playback sooner.

In some scenarios, a media device may perform a transition operation by transitioning from one representation to another representation. Such a transition operation may involve analyzing and/or transitioning from a primary representation to one or more secondary representations in order to provide a smoother or faster content transition. For example, a transition operation may allow a content player to smoothly transition to content at a different resolution, to perform trick mode operation, or to transition to an advertisement. If the transition operation is over, the media device may transition back to the primary representation. In some scenarios, this transition operation may involve transitioning between multiple representations until the primary representation is accessed.

Transitions between representations may take place at segment boundaries of content segments. For example, a transition operation may take place at an endpoint of a content segment of a primary representation and a starting point of a secondary representation. In some instances, a media device may be unable to find a representation that includes a content segment beginning at the same time as a transition operation. Accordingly, the transition operation may take place at some point within the respective content segments. For example, the transition operation may take place at a midpoint of the segment or some other point other than the beginning or the end of a segment (e.g., an inter-segment transition). In these scenarios, the disclosed techniques allow for transitions with reduced decoding errors.

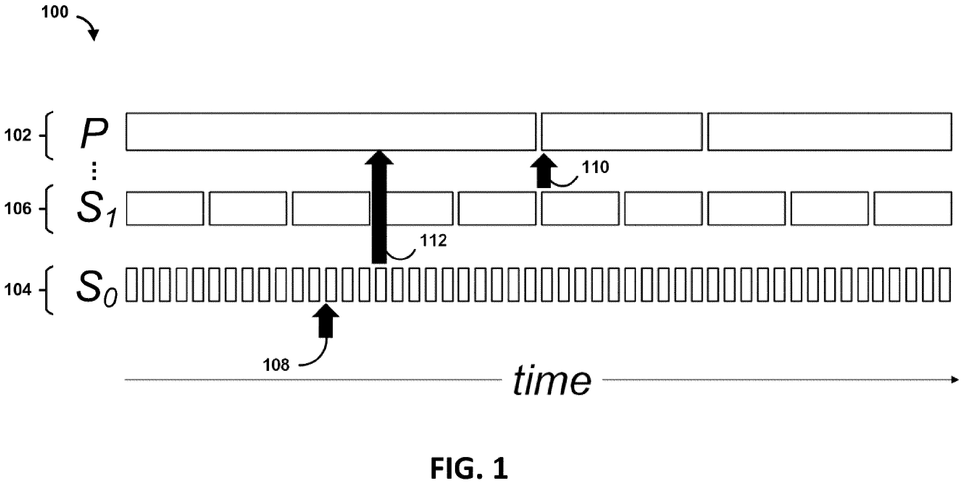

FIG. 1 shows an example of a transition operation 100 between representations. The transition operation 100 may be associated with a content transition operation, such as a join operation (e.g., starting a new stream, changing a channel, etc.). A primary representation 102 (e.g., "P") may contain time-aligned fixed-duration or variable-duration content segments. As an example, a first content segment of primary representation 102 may contain 25 frames, a second content segment may contain 10 frames, a third content segment may contain 15 frames, etc.

As shown in the example of FIG. 1, a secondary representation 104 (e.g., S₀) may contain content segments of a shorter duration than the primary representation 102. For example, each content segment of secondary representation 104 may include a single frame of the content. Another secondary representation 106 (e.g., S₁) may include content segments of a shorter duration than the primary representation and a longer duration than secondary representation 104. For example, each content segment of secondary representation 106 may include 5 frames of the content.

Content transition operations may take place at a boundary of a content segment. For example, at content transition 108, a transition may take place at a boundary of a content segment (e.g., a single frame) of secondary representation 104. For example, content may be initiated (e.g., starting a show) at content transition 108. In this example, content transition 108 may be free of errors because the transition is associated with single frames of content and no previous frames of secondary representation 104 are missing or cut off as a result of content transition 108.

As another example of a content transition operation associated with boundaries of content segments, a content transition 110 from secondary representation 106 to primary representation 102 may take place at respective boundaries of content segments. Like content transition 108, content transition 110 may also be free of errors because the transition is associated with boundaries of the respective segments (e.g., a "clean" transition). Because content transition 110 occurs at an end of a content segment associated with secondary representation 106 and a beginning of a content segment associated with primary representation 102, there will be no mismatch of frames between the respective content segments.

As yet another example, a content transition operation may take place at a point other than a boundary of a content segment (e.g., a "dirty" transition). An inter-segment content transition 112 from secondary representation 104 to primary representation 102 may take place at a segment boundary of secondary representation 104 and a point other than a segment boundary (e.g., a midpoint or some point other than an endpoint) of primary representation 102. For example, a user may change from one channel to another, thereby joining the respective representations.

Because inter-segment content transition 112 takes place at a point other than a boundary of a content segment of primary representation 102, a user may experience visual errors or a blank display because leading frames (e.g., key frames or reference frames) of the content segment associated with primary representation 102 have not been received. Moreover, the frames from primary representation 102 after inter-segment content transition 112 may reference one or more preceding frames from secondary representation 104. Errors may result due to differences in reference frames of the respective representations because primary representation 102 and secondary representation 104 are encoded differently. For example, a user may experience macro blocking (e.g., a visual artifact where similar adjacent pixels appear as a contiguous block of color) or other decoding errors at inter-segment content transition 112. Accordingly, the user may experience a delay in delivery of viewable content until a boundary of the representation that is being transitioned to is reached. For example, at inter-segment content transition 112, a delay of 10 frames may be experienced until the beginning of the next content segment of primary representation 102. This and other problems may be improved according to aspects of the present disclosure.

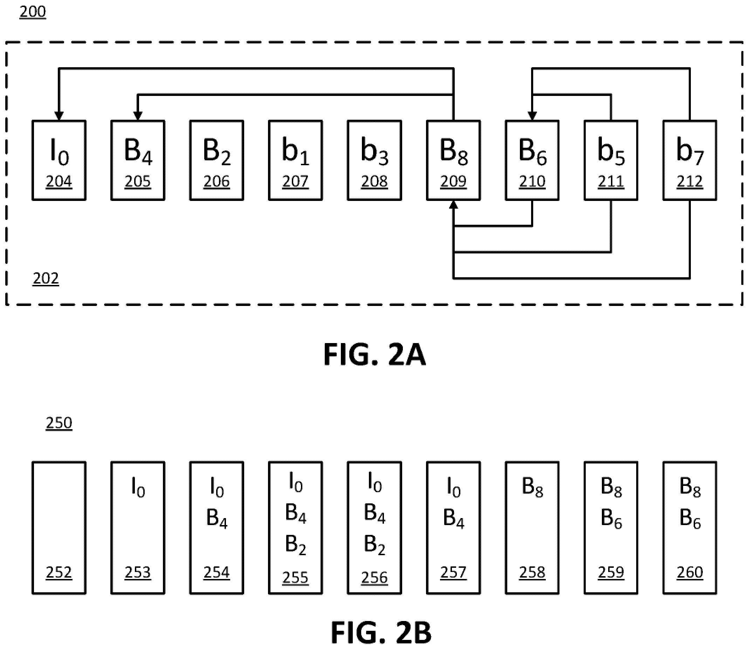

FIG. 2A sets forth an example content segment (e.g., or portion thereof). The content segment may comprise a bitstream 200 including a group of pictures (GOP) 202. Standardized interoperability specifications, such as the video coding standards produced by the MPEG and the ITU-T or the audio coding standards produced by the MPEG, often specify a bitstream format or a decoding process.

GOP 202 may comprise a collection of successive frames, such as frames 204-212. GOP 202 may include a key frame 204 (e.g., I₀). Key frame 204 may be referenced for the decoding of one or more other frames and may be coded without reference to any other frame. For example, key frame 204 may comprise a complete image, such as a JPG or BMP image file. As another example, rather than a complete image, key frame 204 may comprise macroblocks that use intra-prediction to recreate the image of the frame. For example, intra-prediction may be used to search a current frame for a matching macroblock with no temporal prediction. Moreover, each macroblock of key frame 204 may refer to other macroblocks within key frame 204 and may use "spatial redundancies" (e.g., similarities between the pixels of a single frame) in the frame for compression.

GOP 202 may further include a number of predictively coded frames 205-212 (e.g., inter-frames) encoded with reference to one or more other frames. The predictively coded frames may comprise, for example predicted pictures (P-frames) or bi-directional predicted pictures (B-frames).

As shown in FIG. 2A, GOP 202 may include a key-frame (e.g., I₀), and one or more B-frames. B-frames that can be used a reference for encoding another frame are indicated by an uppercase "B" and b-frames that cannot be used as a reference for encoding another frame a indicated by a lowercase "b". Reference relationships between frames 204-212 are illustrated in FIG. 2A by reference arrows. For example, frame 209 (e.g., B₈) may reference key frame 204 (e.g., I₀) and frame 205 (e.g., B₄); frame 210 (e.g., B₆) may reference frame 209 (e.g., B₈); and frame 211 (e.g., bs) and frame 212 (e.g., b₇) may reference frame 210 (e.g., B₆) and frame 209 (e.g., B₈).

FIG. 2B shows an example of a decoded picture buffer (DPB) 250 in a content player decoding the GOP 202 shown in FIG. 2A. DPB 250 may store, at least temporarily, previously decoded frames (e.g., or pictures) for the decoding of one or more remaining pictures in bitstream 200. Each box shown represents the DPB 250 at a particular point in time in the decoding process, where time progresses from left to right. Each representation of DPB 250 shows which frames may be stored in the DPB at that point and used to decode the frame shown directly above DPB 250 in FIG. 2A.

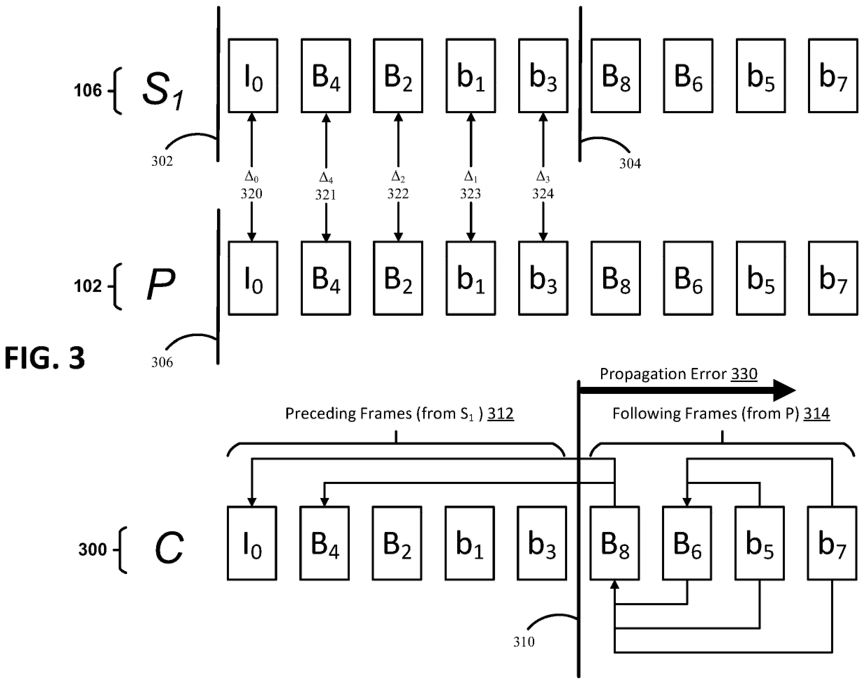

At 252, DPB 250 may start out empty while key frame 204 is decoded. At 253, the DPB 250 may store key frame 204 (I₀) and use key frame 204 (I₀) to decode frame 205 (B₄). At 254, DPB 250 may store frames 204 (I₀) and 205 (B₄) and use these frames to decode frame 206 (B₂). At 255, DPB 250 may store frames 204 (I₀), 205 (B₄), and 206 (B₂) and use these frames to decode frame 207 (bi). At 256, DPB 250 may store frames 204 (I₀), 205 (B₄), and 206 (B₂) and use these frames to decode frame 208 (bs). At 257, DPB 250 may store frames 204 (I₀) and 205 (B₄) and use these frames to decode frame 209 (B₈) (e.g., deleting frame 206). At 258, DPB 250 may store frame 209 (B₈) and use this frame to decode frame 210 (B₆). At 259, DPB 250 may store frames 209 (B₈) and 210 (B₆) and use these frames to decode frame 211 (bs). At 260, DPB 250 may store frames 209 (B₈) and 210 (B₆) and use these frames to decode frame 212 (b₇). From this example, it should be understood, that if a media player switches representations within a content segment, for example, by attempting to read frame 207 (bi), the DPB 250 of the media player may be unable to do so, as required frames to decode that frame will not be present. Instead only frames from the prior representation may be present, potentially resulting in playback errors. FIG. 3 explains how these problems may be mitigated and/or improved using the disclosed techniques.

FIG. 3 illustrates an example of an inter-segment content transition operation in accordance with the present techniques. The example inter-segment content transition operation may comprise a combined content segment 300 having portions of both a primary representation 102 and a secondary representation 106 The combined content segment 300 may be a result of an inter-segment transition from secondary representation 106 to primary representation 102. The primary representation 102 may have a different segment boundary than the secondary representation 106. For example, secondary representation 106 may comprise content segment boundaries at boundary 302 and boundary 304. Primary representation 102 may comprise a content segment boundary at boundary 306.

As illustrated in FIG. 3, the combined content segment 300 may be combined based on a transition from secondary representation 106 to primary representation 102 at inter-segment transition 310. Accordingly, a first portion of the combined content segment 300 may comprise a first set of frames 312 from the secondary representation (Si) preceding inter-segment transition 310. A second portion of the combined content segment may comprise a second set of frames 314 from the primary representation (P) following inter-segment transition 310. As illustrated by the arrows showing the relationships (e.g., described regarding FIGS. 2A and 2B) between the frames of join representation 300, inter-segment transition 310 may result in the following frames (from P) 314 referencing the preceding frames (from S₁) 312. A media player may only have the first set of frames 312 in memory available to decode the second set of frames 314. Thus, the media player may attempt to decode the second set of frames 314 with reference to one or more reference frames (e.g., key frame I₀ and frame B₄) from the first set of frames 312.

The one or more reference frames from the first set of frames 312 may be similar (e.g., same type of frame, but different information) but not identical to the reference frames used to encode the second set of frames. Because secondary representation 106 and primary representation 102 are encoded differently, such as having different length content segments or resolution, there may be differences between the respective frames of secondary representation 106 and primary representation 102. For example, FIG. 3 illustrates differences 320-324 (e.g., Δ₀, Δ₄, Δ₂, Δ₁, and Δ₃) between respective frames of secondary representation 106 and primary representation 102. As a result of these differences, propagation error 330 may occur in the combined content segment 300 when the second set of frames (from P) 314 reference the first set of frames (from S₁) 312.

As an example of propagation error 330, B₈ from the second set of frames 314 may be substituted in a decoded picture buffer (of a media player) with I₀ from the first set of frames (from S₁) 312. The primary representation 102 and the secondary representation 106 may have different encoding parameters, resulting in differences between similarly located frames. For example, the key frame I₀ for the first representation and the key frame I₀ for the second representation may be slightly different. Motion estimation from the key frames to the next frame (B₄) may be encoded differently. The further along the bit stream, the differences between these two sets of frames may increase. Thus, if an inter-segment transition occurs from one representation to the other, the resulting decoded video may include significant errors and may be unpleasant for a viewer.

The differences and resulting errors may be minimized using rate distortion optimization in reference frames when encoding. Rate distortion optimization may comprise minimizing the differences 320-324 between the respective frames of secondary representation 106 and primary representation 102. For example, rate distortion optimization may minimize the differences between representations by minimizing the differences in motion compensation between representations. Using rate distortion optimization may decrease the differences (e.g., Δ₀, Δ₄, Δ₂, Δ₁, Δ₃) between the frames in primary and secondary representation, thereby reducing the propagation error 330 in the decoding process. The decoded segments immediately after the transition 310, even though from a different representation, may more closely resemble decoded segments immediately before the transition point 632. In other words, the second set of frames (from P) 314 may more closely match the first set of frames (from S₁) 312.

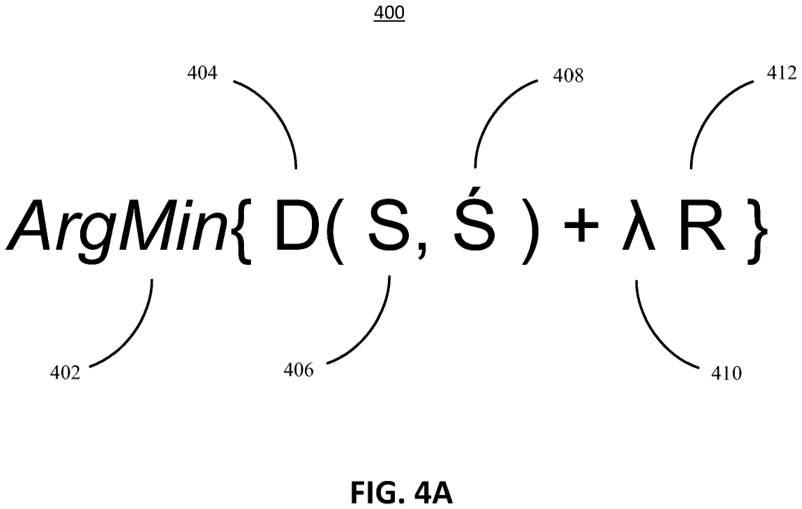

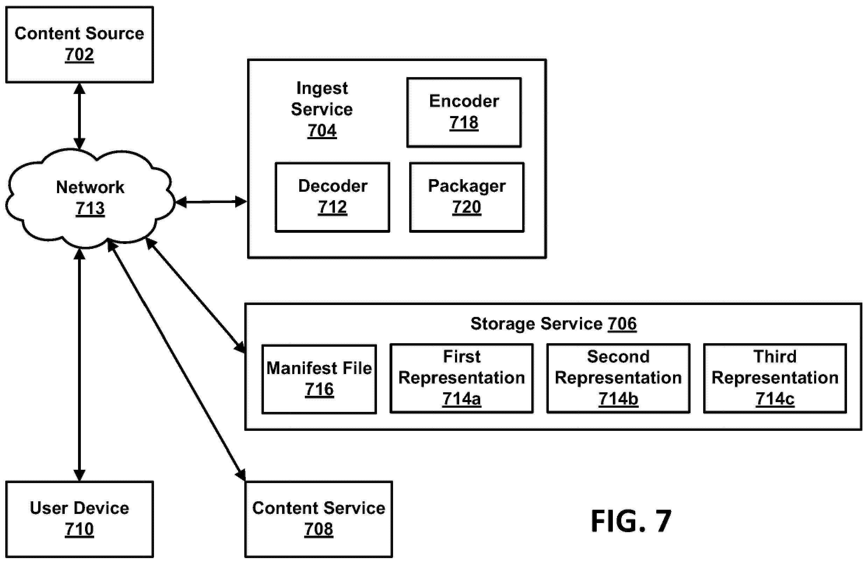

FIG. 4A illustrates a rate distortion optimization function 400. The rate distortion optimization function 400 may be used by an encoder (e.g., encoder 718 of FIG. 7) to make decisions about how to encode both primary and secondary representations of a content item. When encoding, rate distortion optimization function 400 may be used to balance two competing principles: 1) minimizing distortion between frames in different representations and 2) minimizing a computational cost associated with minimizing the distortion. For example, a small amount of distortion between representations may not warrant a high cost of encoding.

More particularly, the rate distortion optimization function 400 may be used to determine the expected performance of one or more encoding parameters for encoding the content. The expected performance may comprise one or more of accuracy, time, or computational resources. The encoding parameters may include any combination of features associated with encoding multiple representations of content, such as quantizer value, mode selection (e.g., inter mode versus intra mode), motion vectors, etc. By balancing distortion with an associated computational cost using the rate distortion optimization function 400, join encoding of multiple profiles (e.g., or representations) may be performed with shorter-segment profile encoders accessing encoded and reconstructed frames from longer-segment profiles.

The rate distortion optimization function 400 may comprise an ArgMin function 402. ArgMin function 402 may be configured to find an optimal encoding strategy or configuration by returning a smallest possible value given constraints. For example, ArgMin function 402 may seek to minimize both distortion resulting from encoding with particular parameters and a computational cost associated with encoding with the particular parameters. By performing the ArgMin function 402 for each of a given set of encoding parameters, the rate distortion optimization function 400 may determine optimal parameters for encoding content. The optimal parameters may be based on the parameters associated with a minimum value for the ArgMin function 402.

The rate distortion optimization function 400 may comprise a distortion function 404. The distortion function 404 (e.g., D) may determine an indication of distortion between a first input S 406 and a second input Ś 408. The distortion function 404 may determine a sum of absolute differences between the first input S and the second input Ś. The first input S may comprise a source frame (e.g., a frame from the source of the content before encoding). The second input Ś may comprise a frame associated with a reconstructed frame (e.g., an encoded frame that is reconstructed based on itself or one or more reference frames). In accordance with aspects of the present disclosure, instead of using the source frame as the first input, the first input S may comprise another reconstructed frame. For example, the first input may be a frame (e.g., reconstructed frame, or portion of a reconstructed frame) associated with a primary representation (e.g., or main representation, representation with a longer segment length)). The second input may be a frame associated with a secondary representation (e.g., a representation with a shorter segment length).

In some scenarios, the first input S and/or second input Ś may only be a portion of a frame. The portion of the frame used for the first input S and/or second input Ś may comprise a block used for motion compensation. The distortion function 404 may determine a sum of absolute differences between a reconstructed block of pixels and a source (e.g., or a reconstructed frame) block of pixels.

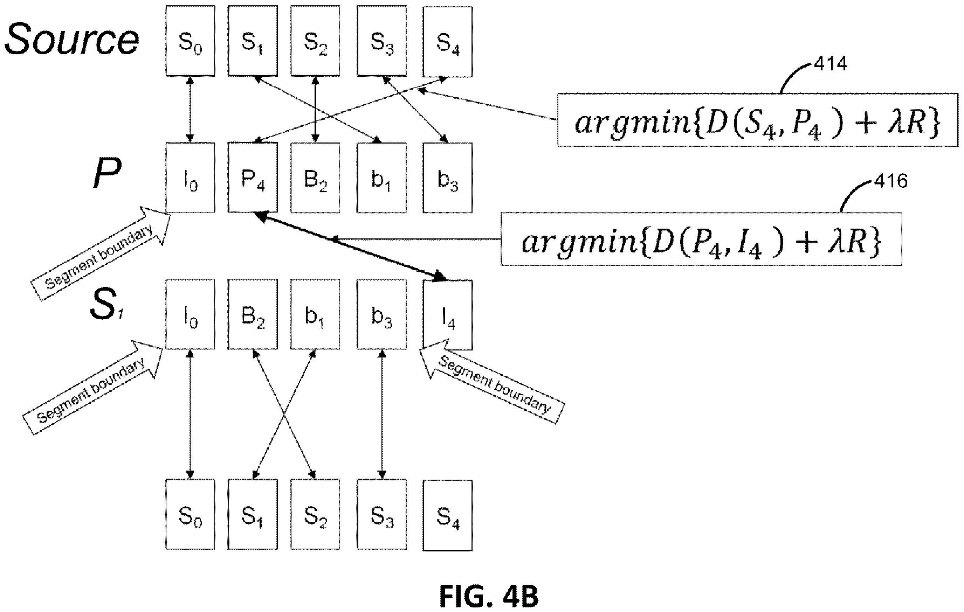

FIG. 4B shows an example of two different options for calculating the distortion function. The first option 414 may compare a source frame and a reconstructed frame. In the first option 414, the first input comprises a source frame. As shown, the S₄ frame from the source version of the content may be the first input and P₄ from the primary representation may be the second input. The second option 416 may compare two reconstructed frames. In the second option 416, the first input may be P₄ from the primary representation and the second input may be I₄ from the secondary representation. In some scenarios, the second option 416 may be an improvement over the first option 414.

The rate distortion optimization function 400 may comprise a rate 412. The rate 412 (e.g., R) may represent an amount of information (e.g., a motion vector or residual) which may need to be transmitted for a mode resulting in a distortion determined by the distortion function 404. The rate 512 may be multiplied by a factor 410 (e.g., *λ*). The factor 410 may be a constant associated with one or more particular encoding parameters. For example, factor 410 may be determined based on bitrate, quantizer value, etc.

Maximum reference "age" may be tracked in order to avoid error propagation due to missing reference frames. Moreover, strict hierarchical GOP (e.g., distance between key frames) or mini-GOP (distance between successive P frames) structures may optionally be used. The maximum age may be defined as the maximum number of frames between the presentation time of a reference picture and the presentation time of the picture referencing the reference picture in at least one motion vector. Limiting this maximum age may reduce error propagation by preventing a picture from referencing an outdated reference picture. The presentation times may be timestamps associated with each corresponding frame indicating a playback time of the frame within a video. The difference in presentation times between two frames may be used as measure of distance (or difference) between the two frames (e.g., as the subject matter in the frames will likely diverge more over time). This distance (e.g., distance between frames) between the reference picture and the picture referencing it may be specified in the manifest. For example, the distance may be specified as a new attribute (e.g., AdaptationSet@maxRefAge) in units of time in a DASH MPD. Moreover, the client may play at least AdaptationSet@maxRefAge worth of pictures from a representation before performing a "dirty switch."

The disclosed techniques may include calculating the rate distortion optimization function based on a reconstructed frame (e.g., instead of a source frame). The distortion function 404 (D) may be calculated based on a reconstructed frame instead of based on the source frame. For example, if the encoder determines (e.g., while encoding or preparing to encode) that only certain areas (e.g., rectangles or blocks of pixels) within a frame are used for reference, the distortion function 404 may be determined relative to the reconstructed frame (e.g., not the source frame). A reference count may be kept for each area in the picture (e.g., to track which areas are used for reference). The distortion function 404 may account for (e.g., be based on) the reference count associated with the corresponding area in the picture. The distortion function 404 may use the reconstructed frame and not the source frame (e.g., for certain areas only) to determine distortion.

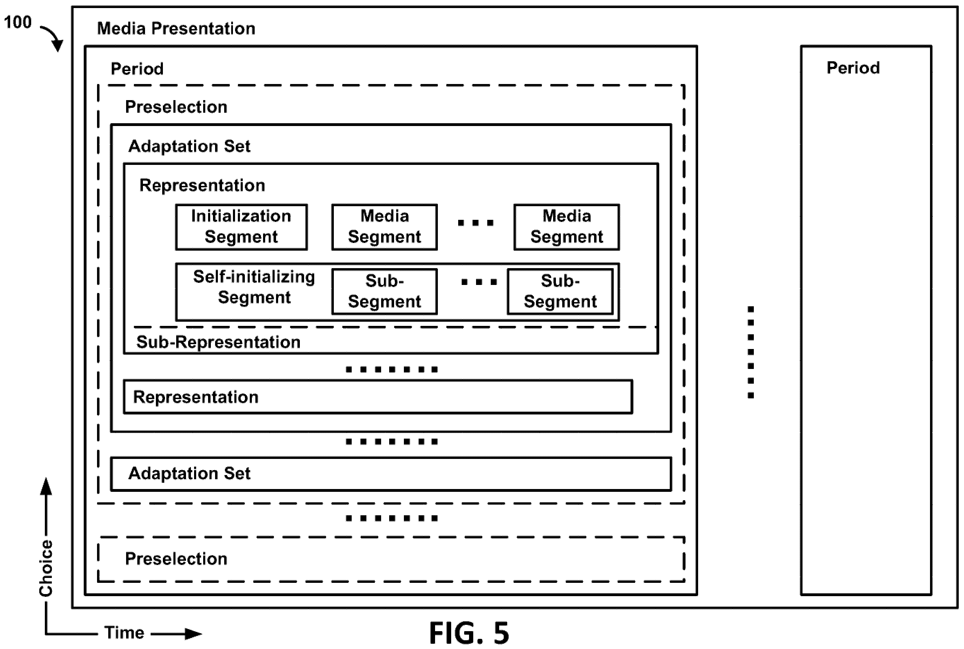

As illustrated in FIG. 5, representations containing the same content (e.g., same video, same codec, but at different bitrates and resolutions) may be grouped into adaptation sets. Representations belonging to the same adaptation set may be time-aligned, which may imply that if one representation has a segment starting at some time T0 and ending at T1, all other representations within this adaptation set have a segment starting at T0 and ending at T1. As a result, representations may typically be switched at will at any segment boundary, e.g., for the purpose of rate adaptation to network conditions. Moreover, aspects of the present disclosure may facilitate switching at different positions than segment boundaries, e.g., for the purpose of fine-grain random access and/or rate adaptation to network conditions.

In some cases, representations belonging to different adaptation sets may be aligned between adaptation sets as well, such that some clients will be able to switch across adaptation sets. An example of this use case is separate adaptation sets for SD, HD, and UHD video where different encryption keys may be used for different groups of resolutions. While SD-only players will only be able to play representations within the SD adaptation set, UHD-capable players will be able to play any SD, HD, or UHD representation within that period and switch across adaptation sets at any segment boundary. Moreover, aspects of the present disclosure may facilitate switching across adaptation sets outside of segment boundaries.

DASH (e.g., or other media formats) may provide support for switching across adaption sets, including a flexible way of constructing segment URLs. Rather than listing all segments and their corresponding URLs, a template (e.g., expressed by a SegmentTemplate element in DASH MPD) may be used to build the URL based on variables such as segment number, a presentation time, or an identifier of a representation.

MPD also defines an example precise timing model for each segment. For any past, current, or future segment a wall-clock presentation time and availability window may be calculated. The availability window may comprise the time interval during which the segment is guaranteed to be available for download.

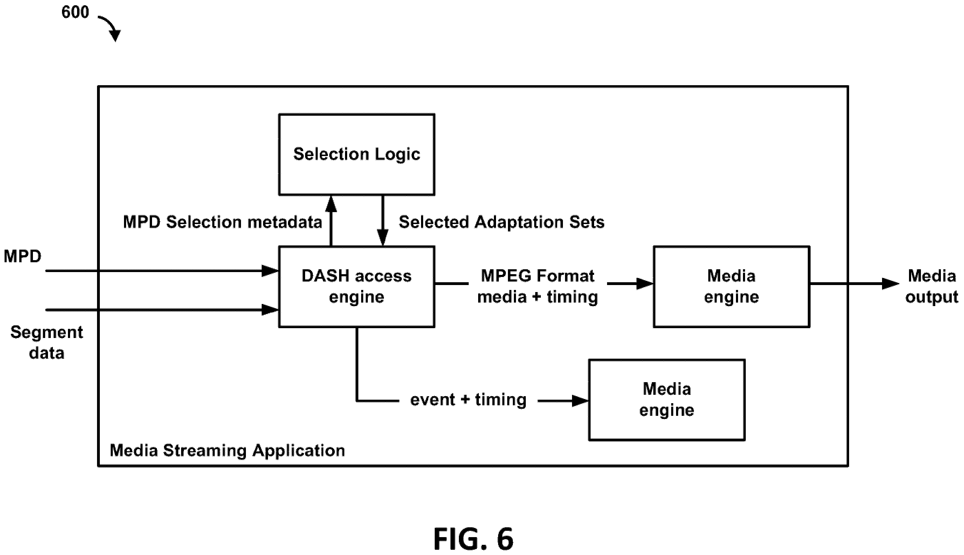

As illustrated in FIG. 6, an example DASH-based media player 600 (see ISO/IEC 23009-1) (a.k.a. media streaming application) may include multiple modules, such as the DASH client itself, advertisement, reporting, and various other pieces of business logic and UI. The DASH client may include an access engine handling the download logic, a media engine handling buffering, decryption, and rendering, and a special media engine for handling events. It should be understood that though a DASH-based media player is shown for purposes of illustration, other media players and adaptive streaming specifications may be used to implement the present techniques.

DASH events may be timed blobs, which contain information tied to media time. Examples of such events are information on ad breaks (SCTE 35), MPD update requests, or semantic events used in UI (e.g. event representing a goal scored during a football game). Some events (such as MPD update) are handled by the DASH client (e.g., or other media player), some are passed to different parts of the player, such as advertisement logic (SCTE 35) or UI (goal scoring). Events can be carried in an MPD, in a media segment, or in a separate event-only representation.

A DASH client (e.g., or other media player) may perform any combination of the following tasks:
(1) download the manifest (e.g., MPD) and parse it. If events are found in the manifest pass them to event handling media engine;
(2) let the application selection logic select adaptation sets to be played (e.g., which language or which codec should be selected);
(3) decide which representations will be played for every content component (e.g. which video bitrate) given data such as the current network conditions, state of the segment buffer (see item 6 below), and its estimates of future segment size and available bandwidth;
(4) derive the URL for the next segment (in each representation) and download it. For error resiliency and load balancing purposes there may be more than one URL per segment.
(5) parse the segment, extract events (if any), and pass the events to the event-handling media engine;
(6) place the downloaded segments into a segment buffer, where the segment buffer is measured in seconds, its fullness is expressed in a number of seconds worth of media versus the total buffer size, and is a FIFO structure where a number of downloaded segments are queued after download and prior to playback; and
(7) if needed, the client downloads a new manifest (e.g., MPD) and goes to step 1, otherwise it continues directly to step 3.

As described above with respect to DASH (e.g., FIG. 6) or other media player, in the context of adaptive streaming, discrete independently playable parts of transmitted content are referred to as media segments and are typically two to ten seconds long. Media segments are typically transmitted by video delivery systems over Hypertext Transfer Protocol (HTTP), e.g., Moving Picture Experts Group (MPEG) Dynamic Adaptive Streaming over HTTP (DASH) or HTTP Live Streaming (HLS). Some video delivery systems may use other protocols, e.g., 3rd Generation Partnership Project (3GPP) File Delivery over Unidirectional Transport (FLUTE) and Advanced Television Systems Committee (ATSC) 3.0 Real-time Object delivery over Unidirectional Transport (ROUTE), to transmit media segments.

Media (e.g., video) content prepared for distribution using systems, such as DASH (e.g., FIG. 5) or other media player, may be encoded in multiple representations. Representations can differ by properties such as bitrate, frame rate, resolution, number of audio channels, audio sampling rate, etc. For each representation, its media file may be partitioned into media segments, which are playable small chunks of media that are typically about two to ten seconds in duration. A client device may parse the media presentation description (MPD) and select a representation that the client has the ability to download and present. The client may then start requesting and downloading media segments and may continuously re-evaluate which representation offers the best quality and is sustainable under current network conditions.

FIG. 7 is a block diagram showing an example system 700 for managing content. The system 700 may comprise one or more of a content source 702, an ingest service 704, a storage service 706, a content service 708, a user device 710, a decoder 712, an encoder 718, and a packager 720. The content source 702, the ingest service 704, the storage service 706, the content service 708, the user device 710, the decoder 712, the encoder 718, and the packager 720 or a combination thereof may be communicatively coupled via a network 713.

The network 713 may comprise a content distribution and/or access network. The network 713 may facilitate communication via one or more communication protocols. The network 713 may comprise fiber, cable, or a combination thereof. The network 713 may comprise wired links, wireless links, a combination thereof, and/or the like. The network 713 may comprise routers, switches, nodes, gateways, servers, modems, and/or the like.

The ingest service 704, the storage service 706, the content service 708, the decoder 712, the encoder 718, the packager 720, or a combination thereof may be implemented by one or more computing nodes. A computing node may comprise a virtual machine, processor, computing device, or a combination thereof. The ingest service 704, the storage service 706, the content service 708, the decoder 712, the encoder 718, and/or the packager 720 may each be implemented on separate computing nodes (e.g., on separate computing devices). The ingest service 704, the storage service 706, the content service 708, the decoder 712, the encoder 718, and/or the packager 720 may each be implemented on the same computing node (e.g., on the same computing device). The ingest service 704, the storage service 706, the content service 708, the decoder 712, the encoder 718, and/or the packager 720 may be implemented by a plurality of computing nodes. The plurality of computing nodes may be geographically dispersed (e.g., to allow efficient access to content). The ingest service 704, the storage service 706, the content service 708, the decoder 712, the encoder 718, and/or the packager 720 may be duplicated at various locations in the network 713.

The content source 702 may be configured to supply content (e.g., one or more content streams, content files, and/or the like). The content may comprise video data, audio data, closed caption (CC) data, a combination thereof, and/or the like. The content source 702 may comprise a content channel, a content stream source, a content file source, and/or the like. The content source 702 may be accessed by the ingest service 704 to determine one or more content assets.

The ingest service 704 may include a decoder 712, an encoder 718, and a packager 720. One or more of these components may be configured to insert one or more encoding characteristics of one or more content segments into a content description file. While each of the components 712, 718, and 720 are shown in FIG. 7 as being part of the ingest service 704, it is understood that one or more of the components may be located externally to the ingest service 704.

An input to the ingest service 704 (e.g., at the decoder 712) may include compressed or uncompressed media (e.g., video). In an example that the input includes compressed video, the video may be compressed with codecs such as VVC (H.266) / EVC / LC-EVC / AV1, or codecs such as MPEG-2 (H.262, ITU-T 13818-2), MPEG-4 AVC (ITU-T H.264, ISO/IEC 14496-10), and HEVC (ITU-T H.265, ISO/IEC 23008-2), or any other similar type of media content. The decoder 712 may be configured as a decoder for one or more such standards. In an example that the input includes uncompressed video input, the decoder 712 may be configured to accept video over a serial digital interface (SDI), wireless, or an Ethernet hardware interface.

The ingest service 704 (e.g., the encoder 718 and/or packager 720) may be configured to encode multiple representations of one or more pluralities of content segments, such as a representation of the content segments at a plurality of resolutions (e.g., 480p, 720p, 3080p, etc.) which may be packaged by the packager 720.

The ingest service 704 (e.g., the encoder 718 and/or packager 720) may be configured to determine (e.g., generate, encode, package) a plurality of representations of a content asset. The plurality of representations of the content may be encoded at the same bitrate or at different bitrates. The plurality of representations of the content asset may comprise a first representation 714a of a content asset. The plurality of representations of the content asset may comprise a second representation 714b of the content asset. The plurality of representations of the content asset may comprise additional representations of the content asset (e.g., a third/fourth/fifth/etc.). The first representation 714a of the content asset may comprise a first plurality of segments encoded according to a first segment duration. The second representation 714b of the content asset may comprise a second plurality of segments encoded according to a second segment duration. The first representation 714a and the second representation 714b (e.g., and the other representations) may each comprise the same content at the same bit rates (e.g., but differ primarily in respect to segment length or other encoding parameters). The second segment duration may be different than the first segment duration. The third representation 714c of the content asset may comprise a third plurality of segments encoded according to a third segment duration. The third segment duration may be different than the first segment duration, and/or the second segment duration. The second segment duration may be shorter than the first segment duration. The third segment duration may be shorter than one or more of the first segment duration or the second segment duration. The third segment duration may be as short as a single frame. The second segment duration may be multiple frames. If the encoder 718 uses a mini-GOP (e.g., mini group of pictures) encode pattern, the second segment duration may be the number of frames in the mini-GOP. The first segment duration may be a plurality of groups of pictures and/or mini groups of pictures.

The ingest service 704 (e.g., the encoder 718 and/or packager 720) may be configured to associate the plurality of representations of the content asset with a corresponding plurality of adaptation sets. The first representation 714a of the content asset may be associated (e.g., via a manifest file 716) with a first adaptation set. The second representation 714b of the content asset may be associated with a second adaptation set. The third representation 714c of the content asset may be associated with a third adaptation set. The ingest service 704 (e.g., the encoder 718 and/or packager 720) may be configured to encode separate representations for each of the first adaptation set, the second adaptation set, and the third adaption set. Each of the first adaptation set, the second adaptation set, and the third adaption set may be a copy of the same content asset (e.g., but encoded according to different segment durations). Each of the plurality of adaptation sets may comprise a plurality of representations (e.g., as shown in FIG. 1). If the first adaptation set has a 1080p representation, a corresponding second adaptation set may comprise the same content asset having a 1080p representation but encoded with a different segment duration.

The ingest service 704 (e.g., the encoder 718 and/or packager 720) may determine (e.g., create, generate) the plurality of adaptation sets to accommodate a content transition operation. The first adaptation set may comprise the "main" or "primary" adaptation set (e.g., primary representation 102). The content associated with the first adaptation set may have the longest segment duration. The second adaptation set and the third adaptation sets may comprise one or more secondary adaptation sets L0...LN with shorter segment durations (e.g., secondary representation 104 or secondary representation 106). Adaptation set L0 may comprise, for example, the content segments of a shortest duration (e.g., single-frame segments as in secondary representation 104), L1 may comprise content segments of a longer duration than L0, L2 may comprise content segments of a longer duration than L1, and so on, where LN comprises content segments of a shorter duration than the "main" adaptation set M (e.g., primary adaptation set). The second adaptation set and/or the third adaptation set may be any one of adaptation sets L0 through LN.

The ingest service 704 (e.g., the encoder 718 and/or packager 720) may be configured to implement a process for generating a manifest file 716 (e.g., media presentation description file, m3u8). The input to the process may comprise a plurality of segments, such as a collection of segments (e.g., stored in a single directory). The example process may be described for MPEG-DASH (e.g., FIGS. 6 and 7), but the process may be adapted to other media players or other content streaming techniques. One or more parts of the process may be repeated for additional periods associated with a content asset.

The manifest file 716 may indicate the plurality of representations of the content asset, the plurality of adaptation sets, relationships thereof, and/or the like in one or more manifest files (e.g., MPD documents). The manifest file 716 may comprise a description of each of the first representation 714a, the second representation 714b, and the third representation 714c of the content asset. The manifest file may identify a first adaptation set, a second adaptation set, a third adaptation set, etc. The manifest file 716 may associate the first representation 714a with the first adaptation set (e.g., as an attribute, child element, or sibling element of an XML element defining the first adaptation set). The manifest file 716 may associate the second representation 714b with the second adaptation set. The manifest file 716 may associate the third representation 714c with the third adaptation set, and so forth.

The manifest file 716 associated with the content asset may comprise an indication of any of the hierarchical relationships (e.g., adaptation set, representation, segments) shown in FIG 1. The manifest file 716 may indicate a relationship between a plurality of adaptation sets. The plurality of adaptation sets may be indicated as siblings in a data structure. The plurality of adaptation sets may be indicated as having the same parent data structure (e.g., period). The manifest file 716 may comprise an indication that the plurality of adaptation sets are aligned at certain locations. The relationship may be indicated using a value in an XML attribute, element within an MPD document, a combination thereof, and/or the like. For each adaptation set with longer segment durations, the indication of the relationship may indicate one or more adaptation sets with shorter segment duration such that every segment boundary in a current adaptation set corresponds to a segment boundary in the one or more adaptation sets. A transition from a first adaptation set may to a second adaptation set may occur at a point other than a segment boundary of the second adaptation set.

The manifest file 716 may be based on a template manifest file. Information about adaptation sets of the content segments may be determined from the template manifest for a general content asset. Manifests in an adaptive streaming content asset service may be similar in makeup for the content asset since the same level of service needs to be provided for all the content assets. A certain number or combination of media components (e.g., Video, Audio, Audio2, etc.) may be present as an identified adaptation set. Supplemental information about representations may be determined from default configuration settings associated with a content service, such as a content service used to access the content asset. Within the set of content segments, content information may be determined.

The ingest service 704 (e.g., the encoder 718 and/or packager 720) may be configured to cause the plurality of content segments (e.g., and other data, such as the manifest file 716 or content information) to be stored by the storage service 706. The plurality of segments may be caused to be stored in a directory, an object store, a logical location (e.g., location associated with a uniform resource identifier, such as a URL), and/or the like. The storage service 706 may be implemented via one or more storage devices. Multiple copies of the plurality of content segments may be stored on different storage devices at different geographic locations. The encoder 718 may be configured to pass compressed frames to the packager 720, which may generate (e.g., by subdividing the content) a plurality of content segments and manifests in formats such as MPD (DASH) or m3u8 (HLS).

The content service 708 may be configured to manage the content stored by the content service 708. The content service 708 may be implemented as one or more servers of a content distribution network and/or content access network. The one or more servers may comprise an origin server, and edge server, a combination thereof and/or the like. The content service 308 may comprise a packaging service, such as a just in time packager, and/or the like.

The content service 708 may be configured to receive requests for content from a plurality of users. The content may comprise video data, audio data, closed caption (CC) data, a combination thereof, and/or the like. The content may comprise a plurality of content channels, such as live channels, streaming channels, cable channels, and/or the like. The content service 308 may comprise one or more servers. The content service 708 may be configured to send, based on a request from the user device 710, one or more of the first representation 714a, the second representation 714b, or the third representation 714c of the content asset. The content service 708 may receive additional requests for different representations of the content asset based on performance of a content transition operation.

The user device 710 may be configured to receive the content from one or more of the content service 708 or the storage service 706. The user device 710 may comprise a computing device, smart device (e.g., smart glasses, smart watch, smart phone), a mobile device, a tablet, a computing station, a laptop, a digital streaming device, a set-top box, a streaming stick, a television, and/or the like. The user device 710 may comprise media streaming application of FIG. 6.

The user device 710 may be configured to receive content via a communication unit. The communication unit may comprise a modem, network interface, and/or the like configured for communication via the network 713. The user device 710 may comprise a user interface unit. The user interface unit may be configured to cause display of a user interface. The user interface may be configured to allow the user to browse available content, such as content sent by the content service 708, content stored by the storage service 706, and/or the like. The user interface may be configured to allow users to request content, such as a content channel (e.g., or a content asset being supplied via a content channel), be stored (e.g., recorded) for later viewing. The user interface may be configured to cause storage of the content based on a configuration setting, such as a buffering setting associated with buffering content in storage (e.g., if a user begins watching a channel, if a rule is triggered, if the user is predicted to request the content at a time time).

The user device 710 may be configured to receive (e.g., at a decoder of the user device) compressed or uncompressed media (e.g., video), including video compressed with codecs such as MPEG-2 (H.262, ITU-T 13818-2), ITU-T H.263, MPEG-4 AVC (ITU-T H.264, ISO/IEC 14496-10), HEVC (ITU-T H.265, ISO/IEC 23008-2), VVC (ITU-T H.266, ISO/IEC 23090-3) or any other similar type of media content. In an example that an input to the user device 710 includes uncompressed video input, the user device 710 may be configured to accept video over a serial digital interface (SDI) or an Ethernet hardware interface

The user device 710 may be configured to determine to perform a content transition operation associated with a content asset. A request, command, or other triggering event (e.g., advertisement) may cause the user device 710 to determine to perform the content operation. The content transition operation may be based on user input, such as a user inputting a command (e.g., via a remote control). The content transition operation may be based on predetermined logic associated with the content asset, such as content tune-in ("zapping"), random access, content replacement logic, advertisement / blackout logic, and/or the like. The content transition operation may be playing an advertisement, performing a trick play mode, joining a content stream, changing a channel, or switching between playback modes.

Inter-frame prediction may be used to encode one or more representations of the content. With inter-frame prediction, a frame may be divided into blocks. The encoder may then try to find blocks that match or are similar to those of a previously encoded frame (e.g., an I-frame or keyframe). For blocks that match, the block may be encoded by pointing to the reference block it matches.

The disclosed techniques may be implemented in the context of delivering content using adaptive content streaming, such as via Adaptive streaming over hypertext transfer protocol (HTTP). Adaptive streaming over HTTP became mainstream with the publication of the Apple HTTP Live Streaming (HLS) specification in 2009. MPEG Dynamic Adaptive Streaming over HTTP (DASH) (e.g., ISO/IEC 23009-1), first published in 2012, is an international standard defining an adaptive streaming system. An adaptive content stream may comprise the following concepts: segments, representations, and manifests. These concepts are described in further detail below, but it should be understood that the disclosure is not limited to HLS or DASH based implementations of adaptive content streaming.

A segment may be the minimal individually addressable unit of data, e.g., a segment may be the entity that can be downloaded using uniform resource locators (URLs) advertised via a manifest. One example of a media segment may be a 2-second part of a linear broadcast, which starts at playout time 0:42:40, ends at 0:42:42, and can be downloaded within a 30-min buffer between 0:42:40 and 1:12:00.

A representation (e.g., also known as variant in HLS and track in CMAF) may be a single encoding version of content. As a non-limiting example, video encoded with the H.264 codec at bitrate of 4.20Mbps, resolution of 1080p (e.g., 1080×1920) and frame rate of 59.94 fps may be a representation. Another representation may have a resolution of 720p (e.g., 1080×1280) and frame rate of 29.97 frames per second (fps).

A manifest may be a document which lists available representations. A manifest can be used to derive segment URLs and the time at which the segments can be downloaded and rendered. A typical asset may comprise (or consist of) tens of thousands of segments.

In the case of HLS, a manifest may be comprised of a "master playlist" and multiple "media playlists." A media playlist may represent a single variant (e.g., representation) and may list all media segments along with information such as timing. A master playlist may describe variants and may contain URLs of media playlists. In case of MPEG DASH, a manifest is called a Media Presentation Description (MPD) and is an XML document. The DASH presentation may be defined using a hierarchical model. As a non-limiting example, a DASH hierarchical data model 600 from ISO/IEC 23009-1 is illustrated in FIG. 6.

The ingest service 704 (e.g., the encoder 718 and/or packager 720) may be configured to encode a content stream/item, e.g., comprising the encoder 718 partitioning a portion and/or frame of the content stream/item into a plurality of coding tree units (CTUs). Each of the CTUs may comprise a plurality of pixels. The CTUs may be partitioned into coding units (CUs) (e.g., coding blocks). For example, a content item may include a plurality of frames ( e.g., a series of frames/pictures/portions, etc.). The plurality of frames may comprise I-frames, P-frames, and/or B-frames. An I-frame (e.g., an Intra-coded picture) may include and/or represent a complete image/picture. A P-frame ( e.g., a Predicted picture/delta frame) may comprise only the changes in an image from a previous frame. For example, in a scene where a person moves across a stationary background, only the person's movements need to be encoded in a corresponding P-frame in order to indicate the change in the person's position with respect to the stationary background. To save space and computational resources, the encoder 318 may not store information/data indicating any unchanged background pixels in the P-frame. A B-frame (e.g., a Bidirectional predicted picture) may enable the encoder 718 to save more space and computational resources by storing differences between a current frame and both a preceding and a following frame. Each frame of a content item may be divided into a quantity of partitions. Each partition may comprise a plurality of pixels. Depending on a coding format (e.g., a CODEC), the partition may be a block, a macroblock, a CTU, etc. The order in which I-frames, P-frames, and B-frames are arranged is referred to herein as a Group of Pictures (GOP) structure----or simply a GOP. The encoder 718 may encode frames as open GOPs or as closed GOPs.

The ingest service 704 (e.g., the encoder 718 and/or packager 720) may be configured to determine a frame associated with a first representation 714a of a content asset to use as a reference for encoding a second frame associated with a second representation 714b of the content asset. A rate distortion function may be used to determine encoding parameters for the first frame and/or the second frame. For example, the rate distortion function may comprise a distortion value that indicates distortion between the first frame and the second frame (e.g., same frame (by time) in the primary and secondary representation). The ingest service 704 may determine the encoding parameters based on minimizing the distortion value. In some embodiments, the ingest service 704 may perform multiple calculations of the distortion value (e.g., using different input values) to determine which values or parameters result in the lowest distortion value. The ingest service 704 (e.g., the encoder 718 and/or packager 720) may encode the first frame and/or second frame using the determined encoding parameters and may send the first frame and/or the second frame to a user device 710.

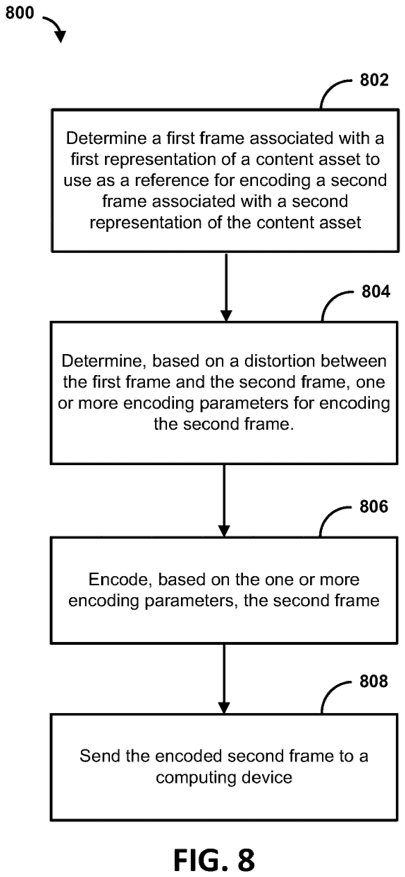

FIG. 8 shows an example method 800 for encoding streaming content (e.g., video and/or audio). The method 800 may comprise a computer implemented method. The method 800 may be implemented by one or more devices (e.g., computing devices, servers) and/or services disclosed herein, such as the devices, storage, and/or services of FIG. 6, FIG. 7, and FIG. 11.

At step 802, a first frame associated with a first representation of a content asset to use as a reference for encoding a second frame associated with a second representation of the content asset may be determined. The first representation of the content asset may comprise a first plurality of segments associated with (e.g., encoded according to) a first segment duration. The first representation of the content asset may comprise first content segments and may be associated with (e.g., in a manifest file) a first adaptation set. The second representation of the content asset may comprise second content segments and may be associated with (e.g., in a manifest file) a second adaptation set. The first representation may be one of several content representations (e.g., each representation corresponding to a different resolution or bit rate, such as HD, SD, UHD) identified in the first adaptation set. The second version may be a different one of the several content representations. For example, the first content segments may have a different size or length (e.g., longer or shorter) than the second content segments.

The determination of the first frame associated with the first representation of the content asset to use as the reference for encoding the second frame associated with the second representation of the content asset may be made by a first device (e.g., user device 710). The determination may be based on a user input, such as a user inputting a command. The determination may be based on predetermined logic associated with the content asset, such as content replacement logic, advertisement logic, and/or the like. The logic may not take into account segment switching points. The result may be that the content transition operation occurs or is scheduled to occur during the middle of a content segment (e.g., not at a boundary of the content segment). Accordingly, the techniques disclosed herein may be used to adapt the logic to any content stream. The content transition operation may be playing an advertisement, performing a trick play mode, joining a content stream, changing a channel, or switching between playback modes. The content asset may comprise video, audio, text, and/or the like. The content asset may comprise a video stream, audio stream, content stream, live stream, gaming stream, and/or the like.

At step 804, a determination may be made of one or more encoding parameters for encoding the second frame. The determination may be made based on a difference or a distortion between the first frame and the second frame. For example, the method 800 may determine the one or more encoding parameters by minimizing a rate distortion function. The rate distortion function may comprise a distortion value indicative of distortion between the first frame and the second frame.

The one or more encoding parameters may be based on an encoding type. Moreover, the encoding parameters may be based on one or more content streams encoded by the encoder. For example, an encoding parameter may comprise at least one of an encoding quantization level (e.g., a size of coefficient range for grouping coefficients), a predictive frame error, a relative size of an inter-coded frame with respect to an intra-coded frame, a number of motion vectors to encode in a frame, a quantizing step size (e.g., a bit precision), a combination thereof, and/or the like. As another example, an encoding parameter may comprise a value indicating at least one of a low complexity to encode, a medium complexity to encode, or a high complexity to encode. As a further example, an encoding parameter may comprise a transform coefficient, a quantization parameter value, a motion vector, an inter-prediction parameter value, an intra-prediction parameter value, a motion estimation parameter value, a partitioning parameter value, a combination thereof, and/or the like. The encoder may be configured to insert encoding parameters into the content streams and/or provide encoding parameters to other devices.

Moreover, an intra prediction mode associated with the content may be determined and the one or more encoding parameters may be determined based on the intra prediction mode. A quantizer associated with the content may be determined and the one or more encoding parameters may be determined based on the quantizer. A rate sensitivity parameter may be determined based on a quality associated with the content and the one or more encoding parameters may be determined based on the rate sensitivity parameter.

At step 806, the second frame may be encoded based on the one or more encoding parameters. Encoding the second stream may comprise the encoder partitioning a portion and/or frame of the content stream/item into a plurality of coding tree units (CTUs). Each of the CTUs may comprise a plurality of pixels. The CTUs may be partitioned into coding units (CUs) (e.g., coding blocks). For example, the second frame may include a plurality of frames (e.g., a series of frames/pictures/portions, etc.). The plurality of frames may comprise I-frames, P-frames, and/or B-frames. An I-frame (e.g., an Intra-coded picture) may include and/or represent a complete image/picture. AP-frame ( e.g., a Predicted picture/delta frame) may comprise only the changes in an image from a previous frame. For example, in a scene where a person moves across a stationary background, only the person's movements need to be encoded in a corresponding P-frame in order to indicate the change in the person's position with respect to the stationary background. To save space and computational resources, the encoder may not store information/data indicating any unchanged background pixels in the P-frame. AB-frame (e.g., a Bidirectional predicted picture) may enable the encoder to save more space and computational resources by storing differences between a current frame and both a preceding and a following frame. Each frame of a content item may be divided into a quantity of partitions. Each partition may comprise a plurality of pixels. Depending on a coding format (e.g., a CODEC), the partition may be a block, a macroblock, a CTU, etc. The order in which I-frames, P-frames, and B-frames are arranged is referred to herein as a Group of Pictures (GOP) structure, or simply a GOP. The encoder may encode frames as open GOPs or as closed GOPs.

At step 808, the encoded second frame may be sent to a computing device. The encoded second frame may be sent based on a request by the computing device for the encoded second frame (e.g., including one or more encoding parameters). The encoded second frame may be associated with the one or more encoding parameters. Because the encoded second frame may more closely match the first frame, errors associated with an inter-segment content transition from the first frame (e.g., or from another frame encoded with respect to the first frame) to the second frame may be reduced. Also, errors associated with an inter-segment content transition from the second frame to the first frame (e.g., or to another frame encoded with respect to the first frame) to the second frame may be reduced.

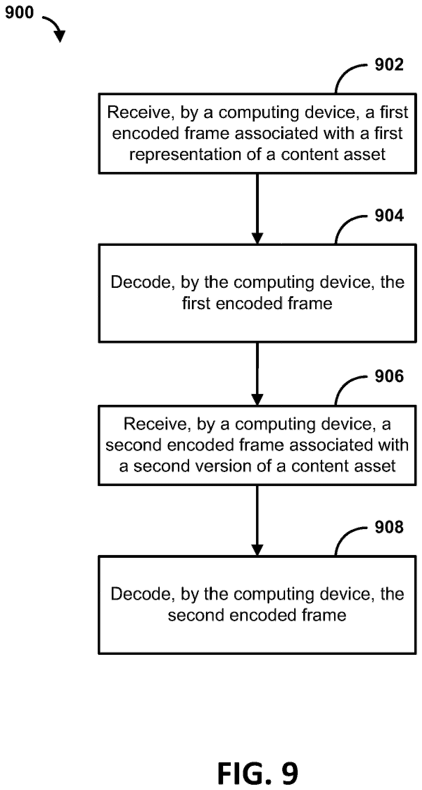

FIG. 9 shows an example method 900 for decoding streaming content (e.g., video and/or audio). The method 900 may comprise a computer implemented method. The method 900 may be implemented by one or more devices (e.g., computing devices, servers) and/or services disclosed herein, such as the devices, storage, and/or services of FIG. 6, FIG. 7, and FIG. 11. Method 900 may be associated with a transition process between adaptation sets. The transition process may be associated with a content transition operation, such as a join operation (e.g., starting a new stream, changing a channel, etc.).

At step 902, a first encoded frame associated with a first representation comprising first content segments of a content asset may be received by a computing device. The first representation of the content asset may comprise a first plurality of segments associated with (e.g., encoded according to) a first segment duration. The first representation of the content asset may be associated with (e.g., in a manifest file) a first adaptation set. The first representation may be one of several content representations (e.g., each representation corresponding to a different resolution or bit rate, such as HD, SD, UHD) identified in the first adaptation set.

At step 904, the computing device may decode the first encoded frame. The first encoded frame may comprise a key frame and/or reference frame (e.g., key frame 204). The first encoded frame may be referenced for the decoding of one or more other frames and may be coded without reference to any other frame. For example, the first encoded frame may comprise a complete image, such as a JPG or BMP image file.

At step 906, the computing device may receive a second encoded frame associated with a second representation comprising second content segments of the content asset. The second encoded frame may be a reference frame, such as a P-frame or a B-frame (e.g., reference frames 205-212). The second encoded frame may be encoded with a reference to another encoded frame. For example, the second encoded frame may comprise only changes between a current frame and one or more preceding frames. Moreover, the second content segments may have a different size or length (e.g., longer or shorter) than the first content segments.

The second encoded frame may be encoded based on one or more encoding parameters. The one or more encoding parameters may be determined based on a difference or a distortion between the first frame and the second frame. One or more encoding parameters may be determined by minimizing a rate distortion function. The rate distortion function may comprise a distortion value indicative of distortion between the first encoded frame and the second encoded frame.

The one or more encoding parameters may be based on an encoding type. Moreover, the encoding parameters may be based on one or more content streams encoded by the encoder. For example, an encoding parameter may comprise at least one of an encoding quantization level (e.g., a size of coefficient range for grouping coefficients), a predictive frame error, a relative size of an inter-coded frame with respect to an intra-coded frame, a number of motion vectors to encode in a frame, a quantizing step size (e.g., a bit precision), a combination thereof, and/or the like. As another example, an encoding parameter may comprise a value indicating at least one of a low complexity to encode, a medium complexity to encode, or a high complexity to encode. As a further example, an encoding parameter may comprise a transform coefficient, a quantization parameter value, a motion vector, an inter-prediction parameter value, an intra-prediction parameter value, a motion estimation parameter value, a partitioning parameter value, a combination thereof, and/or the like. The encoder may be configured to insert encoding parameters into the content streams and/or provide encoding parameters to other devices.

Moreover, an intra prediction mode associated with the content may be determined and the one or more encoding parameters may be determined based on the intra prediction mode. A quantizer associated with the content may be determined and the one or more encoding parameters may be determined based on the quantizer. A rate sensitivity parameter may be determined based on a quality associated with the content and the one or more encoding parameters may be determined based on the rate sensitivity parameter.

At step 908, the computing device may decode the second encoded frame. The second encoded frame may be decoded based on the one or more encoding parameters. Decoding of the second frame may be associated with one or more of the quality or the rate sensitivity parameter. Because the second encoded frame may more closely match the first encoded frame (e.g., based on minimizing the rate distortion function), errors associated with an inter-segment content transition from the first encoded frame (e.g., or from another encoded frame encoded with respect to the first encoded frame) to the second encoded frame may be reduced. Also, errors associated with an inter-segment content transition from the second encoded frame to the first encoded frame (e.g., or to another frame encoded with respect to the first encoded frame) to the second encoded frame may be reduced.

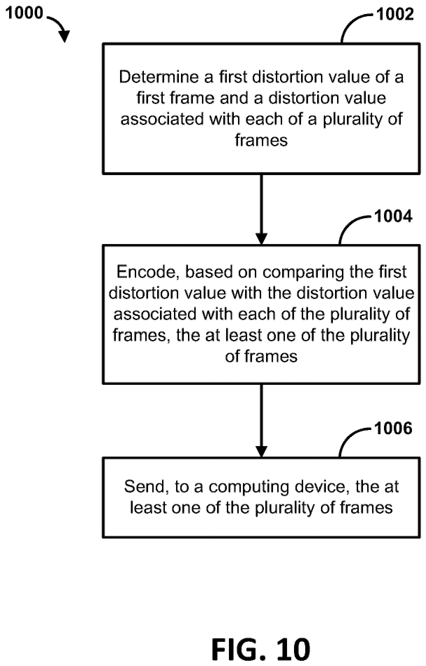

FIG. 10 shows an example method 1000 for encoding streaming content (e.g., video and/or audio). The method 1000 may comprise a computer implemented method. The method 1000 may be implemented by one or more devices (e.g., computing devices, servers) and/or services disclosed herein, such as the devices, storage, and/or services of FIG. 6, FIG. 7, and FIG. 11.

At step 1002, a first distortion value of a first frame may be determined (e.g., by the ingest service 704), as well as a distortion value associated with each of a plurality of frames. The first distortion value or distortion values may be indicative of distortion between a source frame (e.g., a frame selected from a group comprising of the first representation 714a, second representation 714b, or third representation 714c) and each of the plurality of frames (e.g., the remaining frames of the group comprising the first representation 714a, second representation 714b, and third representation 714c).

At step 1004, at least one of the plurality of frames may be encoded based on comparing the first distortion value with the distortion value associated with each of the plurality of frames. A distortion function may be used to determine one or more encoding parameters (e.g., by minimizing the distortion function). The one or more encoding parameters may be used to encode the at least one of the plurality of frames.

For example, the rate distortion function may be determined by comparing a first distortion value of a frame selected from a group comprising of the first representation 714a, second representation 714b, or third representation 714c with a distortion value associated with each of the remaining frames of the group comprising the first representation 714a, second representation 714b, and third representation 714c. Moreover, the rate distortion function may comprise the distortion value (e.g., indicating distortion between a first frame and a second frame). The rate distortion function may comprise a computation cost associated with encoding each of the plurality of the frames. The computation cost may be based on the time or computational resources associated with encoding each of the plurality of frames. For example, a small amount of distortion (e.g., a small difference between a source frame and another frame) may not warrant a high cost of encoding.

At step 1006, the encoded frame(s) may be sent to a computing device. The encoded frame(s) may be sent based on a request by the computing device for the encoded second frame (e.g., including one or more encoding parameters). The encoded frame(s) may be associated with the one or more encoding parameters. Because the encoded frame(s) may more closely match a source frame (e.g., based on minimizing the rate distortion function), errors associated with inter-segment content transitions to or from the encoded frame(s) may be reduced.

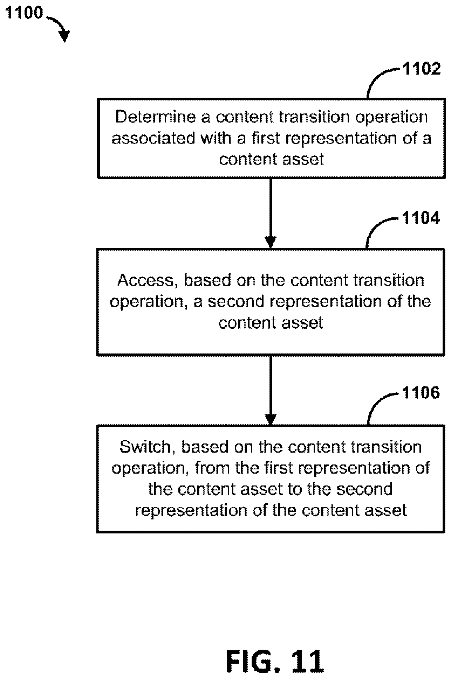

FIG. 11 shows an example method 1100 for playing streaming content (e.g., video and/or audio). The method 1100 can comprise a computer implemented method. The method 1100 can be implemented by one or more devices (e.g., computing devices, servers) and/or services disclosed herein, such as the devices, storage, and/or services of FIGS. 5-7 and 12. Specifically, the method 1100 can be implemented by a content player (e.g., user device 710).

At step 1102, a content transition operation may be determined. The content transition operation may be associated with a content asset. The content transition operation may be associated with (e.g., be implemented by) switching from a first representation of the content asset to a second representation of the content asset. The first representation of the content asset may comprise a first plurality of segments associated with (e.g., encoded according to) a first segment duration. The second representation of the content asset may comprise a second plurality of segments associated with (e.g., encoded according to) a second segment duration (e.g., longer or shorter than the first segment duration). Each of the first representation and the second representation may be one of several content representations (e.g., each representation corresponding to a different resolution or bit rate, such as HD, SD, UHD).

The determination of the content transition operation may be made by a first device (e.g., user device 710). The content transition operation may be based on user input, such as a user inputting a command (e.g., changing a channel, initiating trick play, changing a speed and/or direction of playback, changing a content resolution setting). A time and/or location may be determined for the content transition operation. The content transition operation may be based on predetermined logic associated with the content asset, such as content replacement logic, advertisement logic, and/or the like. The logic may not take into account segment switching points. The result may be that the content transition operation occurs or is scheduled to occur at some point within the respective second content segments of the second representation. For example, the transition operation may take place at a midpoint of a second content segment or some other point other than the beginning or the end of a second content segment (e.g., an inter-segment transition).

Because an inter-segment content transition takes place at a point other than a boundary of a second content segment of the second representation, a user may experience visual errors or a blank display because leading frames (e.g., key frames or reference frames) if the second content segment associated with the second representation have not been received. Moreover, a decoder may attempt to decode frames from the second representation after inter-segment content transition, e.g., using one or more preceding frames from a first content segment of the first representation as a reference. Errors may result due to differences in reference frames of the respective representations because the second representation and the first representation are encoded differently. For example, a user may experience macro blocking (e.g., a visual artifact where similar adjacent pixels appear as a contiguous block of color) or other decoding errors at the inter-segment content transition. Accordingly, the user may experience a delay in delivery of viewable content until a boundary of a second content segment of the second representation that is being transitioned to is reached. This and other problems may be improved according to aspects of the present disclosure.

Accordingly, the techniques disclosed herein may be used to minimize distortion associated with the inter-segment content transition from the first content segment to the second content segment. The inter-segment content transition operation may be playing an advertisement, performing a trick play mode, joining a content stream, changing a channel, or switching between playback modes. The content asset may comprise video, audio, text, and/or the like. The content asset may comprise a video stream, audio stream, content stream, live stream, gaming stream, and/or the like.

The location of the content transition operation may comprise a location identified on a segment timeline (e.g., or content timeline, content stream timeline). A triggering event may cause step 1102. The triggering event may comprise a request event (e.g., a request for one or more content segments associated with the content asset, a request to perform the content transition operation), detecting a change to the content asset, a failure event (e.g., failure to identify a transition point of the first version of the content that satisfies a requirement of the content transition operation), a combination thereof, and/or the like.

At step 1104, a second representation of the content asset may be accessed (e.g., switched to, received, rendered, played, requested). The second representation of the content asset may be accessed (e.g., switched to) by the first device (e.g., user device 710). The second representation (or a portion thereof) of the content asset may be received from a second device (e.g., a server, content service 708). The second representation of the content may be accessed (e.g., switched to) based on the determination of step 1102. A content description file may comprise a value (e.g., signal, configuration option) indicating the presence of additional representations of the content. The value may be associated with representations of the content having different segment durations. The value may indicate information associated with transitioning between different versions. The first device may read the content description file to determine the value. The second representation of the content may be accessed based on the value, the presence of additional content representations in the content description value, the information associated with transitioning between the content representations, and/or the like.

The second representation of the content asset may comprise a second plurality of segments encoded according to a second segment duration different than the first segment duration. The second representation of the content asset may be associated with (e.g., in the manifest file) and may be accessed by requesting segments of the content asset associated with the second representation. The second segment duration (e.g., a number of frames) may be different from than the first segment duration or may be the same as the first segment duration.

At step 1106, a switch from the first representation of the content to the second representation of the content may be performed. The switch to the second representation may be made by executing the content transition operation determined at step 1102. The switch to the second version may occur at some point within a content segment of the second representation. For example, the transition operation may take place at a midpoint of a content segment of the second representation or some other point other than the beginning or the end of a content segment of the second representation (e.g., an inter-segment transition).

Typical distortion associated with an inter-segment transition to the second representation may be minimized based on the respective encoding of the content segments of the first representation and the content segments of the second representation. For example, to minimize the performance issues associated with the inter-segment content transition to the second representation, a joint encoding process may have been used (e.g., by the encoder 718) to encode the respective content segment of the first representation and the second representation. The joint encoding process may comprise encoding the first representation and the second representation of the content asset, with at least a portion of the representations having content segments with shorter segment lengths than others. An encoder (e.g., encoder 718) performing joint encoding may allow encoding of representations with shorter segment lengths to access decoded and/or reconstructed frames from representations with longer segment lengths.

A rate distortion optimization function may be used in the encoding process to minimize the differences between the reference frames of the first representation and the second representation. A rate distortion optimization function may configure the encoder (e.g., encoder 718) to encode the reference frames of the different representations to be closer to each other by minimizing the differences between reference frames of the different representations. Accordingly, errors may be minimized when an inter-segment content transition occurs (e.g., at a content player) and a frame from the first representation is used (e.g., as a substitute reference) to decode a frame from the second representation.

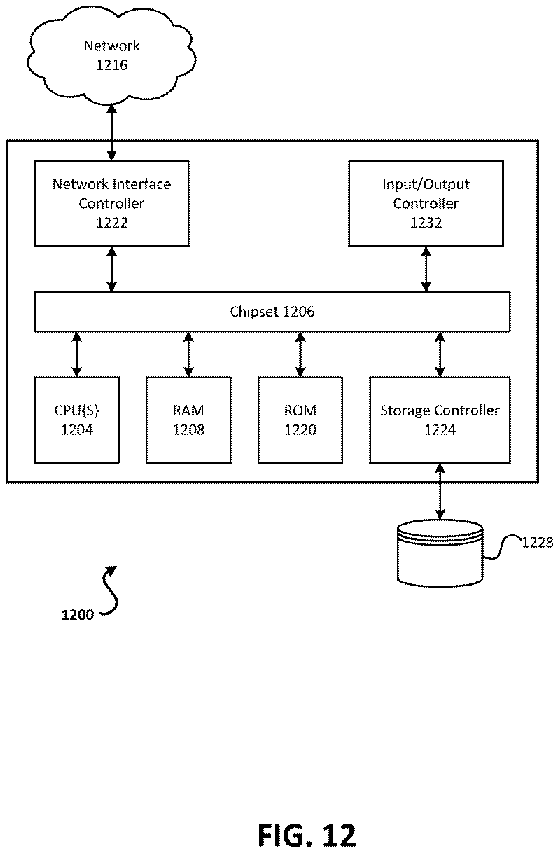

FIG. 12 depicts a computing device that may be used in various aspects, such as the servers, nodes, and/or devices depicted in FIG. 7. With regard to the example architecture of FIG. 7, the content source 702, ingest service 704, storage service 706, content service 708, user device 710, decoder 712, encoder 718, and packager 720 may each be implemented in an instance of a computing device 1200 of FIG. 12. The computer architecture shown in FIG. 12 shows a conventional server computer, workstation, desktop computer, laptop, tablet, network appliance, PDA, e-reader, digital cellular phone, or other computing node, and may be utilized to execute any aspects of the computers described herein, such as to implement the methods described in relation to FIGS. 8-10.

The computing device 1200 may comprise a baseboard, or "motherboard," which is a printed circuit board to which a multitude of components or devices may be connected by way of a system bus or other electrical communication paths. One or more central processing units (CPUs) 1204 may operate in conjunction with a chipset 1206. The CPU(s) 1204 may be standard programmable processors that perform arithmetic and logical operations necessary for the operation of the computing device 1200.

The CPU(s) 1204 may perform the necessary operations by transitioning from one discrete physical state to the next through the manipulation of switching elements that differentiate between and change these states. Switching elements may generally include electronic circuits that maintain one of two binary states, such as flip-flops, and electronic circuits that provide an output state based on the logical combination of the states of one or more other switching elements, such as logic gates. These basic switching elements may be combined to create more complex logic circuits including registers, adders-subtractors, arithmetic logic units, floating-point units, and the like.

The CPU(s) 1204 may be augmented with or replaced by other processing units, such as GPU(s) 1205. The GPU(s) 1205 may comprise processing units specialized for but not necessarily limited to highly parallel computations, such as graphics and other visualization-related processing.

A chipset 1206 may provide an interface between the CPU(s) 1204 and the remainder of the components and devices on the baseboard. The chipset 1206 may provide an interface to a random access memory (RAM) 1208 used as the main memory in the computing device 1200. The chipset 1206 may further provide an interface to a computer-readable storage medium, such as a read-only memory (ROM) 1220 or non-volatile RAM (NVRAM) (not shown), for storing basic routines that may help to start up the computing device 1200 and to transfer information between the various components and devices. ROM 1220 or NVRAM may also store other software components necessary for the operation of the computing device 1200 in accordance with the aspects described herein.

The computing device 1200 may operate in a networked environment using logical connections to remote computing nodes and computer systems through local area network (LAN) 1216. The chipset 1206 may comprise functionality for providing network connectivity through a network interface controller (NIC) 1222, such as a gigabit Ethernet adapter. A NIC 1222 may be capable of connecting the computing device 1200 to other computing nodes over a network 1216. It should be appreciated that multiple NICs 1222 may be present in the computing device 1200, connecting the computing device to other types of networks and remote computer systems.

The computing device 1200 may be connected to a mass storage device 1228 that provides non-volatile storage for the computer. The mass storage device 1228 may store system programs, application programs, other program modules, and data, which have been described in greater detail herein. The mass storage device 1228 may be connected to the computing device 1200 through a storage controller 1224 connected to the chipset 1206. The mass storage device 1228 may consist of one or more physical storage units. A storage controller 1224 may interface with the physical storage units through a serial attached SCSI (SAS) interface, a serial advanced technology attachment (SATA) interface, a fiber channel (FC) interface, or other type of interface for physically connecting and transferring data between computers and physical storage units.

The computing device 1200 may store data on a mass storage device 1228 by transforming the physical state of the physical storage units to reflect the information being stored. The specific transformation of a physical state may depend on various factors and on different implementations of this description. Examples of such factors may comprise, but are not limited to, the technology used to implement the physical storage units and whether the mass storage device 1228 is characterized as primary or secondary storage and the like.

The computing device 1200 may store information to the mass storage device 1228 by issuing instructions through a storage controller 1224 to alter the magnetic characteristics of a particular location within a magnetic disk drive unit, the reflective or refractive characteristics of a particular location in an optical storage unit, or the electrical characteristics of a particular capacitor, transistor, or other discrete component in a solid-state storage unit. Other transformations of physical media are possible without departing from the scope of the present description, with the foregoing examples provided only to facilitate this description. The computing device 1200 may further read information from the mass storage device 1228 by detecting the physical states or characteristics of one or more particular locations within the physical storage units.

In addition to the mass storage device 1228 described above, the computing device 1200 may have access to other computer-readable storage media to store and retrieve information, such as program modules, data structures, or other data. It should be appreciated by those skilled in the art that computer-readable storage media may be any available media that provides for the storage of non-transitory data and that may be accessed by the computing device 1200.

By way of example and not limitation, computer-readable storage media may comprise volatile and non-volatile, transitory computer-readable storage media and non-transitory computer-readable storage media, and removable and non-removable media implemented in any method or technology. Computer-readable storage media includes, but is not limited to, RAM, ROM, erasable programmable ROM ("EPROM"), electrically erasable programmable ROM ("EEPROM"), flash memory or other solid-state memory technology, compact disc ROM ("CD-ROM"), digital versatile disk ("DVD"), high definition DVD ("HD-DVD"), BLU-RAY, or other optical storage, magnetic cassettes, magnetic tape, magnetic disk storage, other magnetic storage devices, or any other medium that may be used to store the desired information in a non-transitory fashion.

A mass storage device, such as the mass storage device 1228 depicted in FIG. 12, may store an operating system utilized to control the operation of the computing device 1200. The operating system may comprise a version of the LINUX operating system. The operating system may comprise a version of the WINDOWS SERVER operating system from the MICROSOFT Corporation. According to further aspects, the operating system may comprise a version of the UNIX operating system. Various mobile phone operating systems, such as IOS and ANDROID, may also be utilized. It should be appreciated that other operating systems may also be utilized. The mass storage device 1228 may store other system or application programs and data utilized by the computing device 1200.

The mass storage device 1228 or other computer-readable storage media may also be encoded with computer-executable instructions, which, when loaded into the computing device 1200, transforms the computing device from a general-purpose computing system into a special-purpose computer capable of implementing the aspects described herein. These computer-executable instructions transform the computing device 1200 by specifying how the CPU(s) 1204 transition between states, as described above. The computing device 1200 may have access to computer-readable storage media storing computer-executable instructions, which, when executed by the computing device 1200, may perform the methods described in relation to FIGS. 8-11.

A computing device, such as the computing device 1200 depicted in FIG. 12, may also include an input/output controller 1232 for receiving and processing input from a number of input devices, such as a keyboard, a mouse, a touchpad, a touch screen, an electronic stylus, or other type of input device. Similarly, an input/output controller 1232 may provide output to a display, such as a computer monitor, a flat-panel display, a digital projector, a printer, a plotter, or other type of output device. It will be appreciated that the computing device 1200 may not include all of the components shown in FIG. 12, may comprise other components that are not explicitly shown in FIG. 12, or may utilize an architecture completely different than that shown in FIG. 12.

As described herein, a computing device may be a physical computing device, such as the computing device 1200 of FIG. 12. A computing node may also include a virtual machine host process and one or more virtual machine instances. Computer-executable instructions may be executed by the physical hardware of a computing device indirectly through interpretation and/or execution of instructions stored and executed in the context of a virtual machine.

It is to be understood that the methods and systems are not limited to specific methods, specific components, or to particular implementations. It is also to be understood that the terminology used herein is for the purpose of describing particular embodiments only and is not intended to be limiting.

As used in the specification and the appended claims, the singular forms "a," "an," and "the" include plural referents unless the context clearly dictates otherwise. Ranges may be expressed herein as from "about" one particular value, and/or to "about" another particular value. When such a range is expressed, another embodiment includes from the one particular value and/or to the other particular value. Similarly, when values are expressed as approximations, by use of the antecedent "about," it will be understood that the particular value forms another embodiment. It will be further understood that the endpoints of each of the ranges are significant both in relation to the other endpoint, and independently of the other endpoint.

"Optional" or "optionally" means that the subsequently described event or circumstance may or may not occur, and that the description includes instances where said event or circumstance occurs and instances where it does not.

Throughout the description and claims of this specification, the word "comprise" and variations of the word, such as "comprising" and "comprises," means "including but not limited to," and is not intended to exclude, for example, other components, integers or steps. "Exemplary" means "an example of" and is not intended to convey an indication of a preferred or ideal embodiment. "Such as" is not used in a restrictive sense, but for explanatory purposes.

Components are described that may be used to perform the described methods and systems. When combinations, subsets, interactions, groups, etc., of these components are described, it is understood that while specific references to each of the various individual and collective combinations and permutations of these may not be explicitly described, each is specifically contemplated and described herein, for all methods and systems. This applies to all aspects of this application including, but not limited to, operations in described methods. Thus, if there are a variety of additional operations that may be performed it is understood that each of these additional operations may be performed with any specific embodiment or combination of embodiments of the described methods.

As will be appreciated by one skilled in the art, the methods and systems may take the form of an entirely hardware embodiment, an entirely software embodiment, or an embodiment combining software and hardware aspects. Furthermore, the methods and systems may take the form of a computer program product on a computer-readable storage medium having computer-readable program instructions (e.g., computer software) embodied in the storage medium. More particularly, the present methods and systems may take the form of web-implemented computer software. Any suitable computer-readable storage medium may be utilized including hard disks, CD-ROMs, optical storage devices, or magnetic storage devices.

Embodiments of the methods and systems are described herein with reference to block diagrams and flowchart illustrations of methods, systems, apparatuses and computer program products. It will be understood that each block of the block diagrams and flowchart illustrations, and combinations of blocks in the block diagrams and flowchart illustrations, respectively, may be implemented by computer program instructions. These computer program instructions may be loaded on a general-purpose computer, special-purpose computer, or other programmable data processing apparatus to produce a machine, such that the instructions which execute on the computer or other programmable data processing apparatus create a means for implementing the functions specified in the flowchart block or blocks.

These computer program instructions may also be stored in a computer-readable memory that may direct a computer or other programmable data processing apparatus to function in a particular manner, such that the instructions stored in the computer-readable memory produce an article of manufacture including computer-readable instructions for implementing the function specified in the flowchart block or blocks. The computer program instructions may also be loaded onto a computer or other programmable data processing apparatus to cause a series of operational steps to be performed on the computer or other programmable apparatus to produce a computer-implemented process such that the instructions that execute on the computer or other programmable apparatus provide steps for implementing the functions specified in the flowchart block or blocks.

The various features and processes described above may be used independently of one another, or may be combined in various ways. All possible combinations and sub-combinations are intended to fall within the scope of this disclosure. In addition, certain methods or process blocks may be omitted in some implementations. The methods and processes described herein are also not limited to any particular sequence, and the blocks or states relating thereto may be performed in other sequences that are appropriate. Described blocks or states may be performed in an order other than that specifically described, or multiple blocks or states may be combined in a single block or state. The example blocks or states may be performed in serial, in parallel, or in some other manner. Blocks or states may be added to or removed from the described example embodiments. The example systems and components described herein may be configured differently than described. Elements may be added to, removed from, or rearranged compared to the described example embodiments.

It will also be appreciated that various items are illustrated as being stored in memory or on storage while being used, and that these items or portions thereof may be transferred between memory and other storage devices for purposes of memory management and data integrity. Alternatively, in other embodiments, some or all of the software modules and/or systems may execute in memory on another device and communicate with the illustrated computing systems via inter-computer communication. Furthermore, in some embodiments, some or all of the systems and/or modules may be implemented or provided in other ways, such as at least partially in firmware and/or hardware, including, but not limited to, one or more application-specific integrated circuits ("ASICs"), standard integrated circuits, controllers (e.g., by executing appropriate instructions, and including microcontrollers and/or embedded controllers), field-programmable gate arrays ("FPGAs"), complex programmable logic devices ("CPLDs"), etc. Some or all of the modules, systems, and data structures may also be stored (e.g., as software instructions or structured data) on a computer-readable medium, such as a hard disk, a memory, a network, or a portable media article to be read by an appropriate device or via an appropriate connection. The systems, modules, and data structures may also be transmitted as generated data signals (e.g., as part of a carrier wave or other analog or digital propagated signal) on a variety of computer-readable transmission media, including wireless-based and wired/cable-based media, and may take a variety of forms (e.g., as part of a single or multiplexed analog signal, or as multiple discrete digital packets or frames). Such computer program products may also take other forms in other embodiments. Accordingly, the present invention may be practiced with other computer system configurations.

While the methods and systems have been described in connection with preferred embodiments and specific examples, it is not intended that the scope be limited to the particular embodiments set forth, as the embodiments herein are intended in all respects to be illustrative rather than restrictive.

Here follows a list of clauses, highlight aspects of the disclosure.
Clause 1: A method comprising:
   determining a first frame associated with a first representation comprising first content segments of a content asset;
   determining, based on a difference between the first frame and a second frame associated with a second representation comprising second content segments of the content asset, one or more encoding parameters for encoding the second frame, wherein the first content segments differ in segment length from the second content segments;
   encoding, based on the one or more encoding parameters, the second frame; and
   sending, to a computing device, the second frame.
Clause 2: The method of any preceding clause, wherein the first frame is associated with a content transition operation.
Clause 3: The method of any preceding clause, wherein the first frame comprises a plurality of blocks and further comprising partitioning a first block of the plurality of blocks, wherein the second frame is determined based on the partitioned first block.
Clause 4: The method of any preceding clause, wherein the difference between the first frame and the second frame is based on determining a plurality of reconstructed frames and comparing a first distortion value of a first reconstructed frame with the distortion value associated with each of the plurality of reconstructed frames.
Clause 5: The method of any preceding clause, further comprising minimizing the difference between the first frame and the second frame.
Clause 6: The method of any preceding clause, wherein the one or more encoding parameters are based on an encoding type.
Clause 7: The method of any preceding clause, wherein the one or more encoding parameters are based on one or more of a motion vector, an intra prediction mode, or a quantizer.
Clause 8: The method of any preceding clause, further comprising determining, based on a quality associated with the content asset, a rate sensitivity parameter, wherein the one or more encoding parameters are determined based on the rate sensitivity parameter.
Clause 9: A method, performed alone or in combination with any of the preceding clauses, the method comprising:
   receiving, by a computing device, a first encoded frame associated with a first representation comprising first content segments of a content asset;
   decoding, by the computing device, the first encoded frame;
   receiving, by the computing device, a second encoded frame associated with a second representation comprising second content segments of a content asset, wherein the first content segments differ in size from the second content segments and the second encoded frame is encoded based on one or more encoding parameters determined based on a difference between the first encoded frame and the second encoded frame; and
   decoding, by the computing device, the second encoded frame.
Clause 10: The method of any preceding clause, e.g. clause 9, wherein the second encoded frame is based on a partition of a block associated with the content asset.
Clause 11: The method of any preceding clause, e.g. clause 9, wherein the difference between the first encoded frame and the second encoded frame is based on determining a plurality of reconstructed frames and comparing the distortion value associated with each of the plurality of reconstructed frames.
Clause 12: The method of any preceding clause, e.g. clause 9, wherein the difference is determined by comparing a source frame to a reconstructed frame.
Clause 13: The method of any preceding clause, e.g. clause 9, wherein the one or more encoding parameters are determined based on an encoding type.
Clause 14: The method of any preceding clause, e.g. clause 9, wherein the one or more encoding parameters are determined based on one or more of a motion vector, an intra prediction mode, a quantizer, and a rate sensitivity parameter.
Clause 15: A method, performed alone or in combination with any of the preceding clauses, the method comprising:
   determining a distortion value associated with each of a plurality of frames, wherein the distortion value associated with each of the plurality of frames is indicative of distortion between a first frame of the plurality of frames and the each of the plurality of frames;
   encoding, based on comparing the distortion values associated with each of the plurality of frames, the first frame of the plurality of frames; and
   sending, to a computing device, the first frame of the plurality of frames.
Clause 16: The method of any preceding clause, e.g. clause 15, wherein the first frame is associated with a content transition operation.
Clause 17: The method of any preceding clause, e.g. clause 15, wherein the first frame comprises a plurality of blocks and further comprising partitioning a first block of the plurality of blocks.
Clause 18: The method of any preceding clause, e.g. clause 15, wherein the distortion value associated with each of the plurality of frames is determined based on one or more encoding parameters.
Clause 19: The method of any preceding clause, e.g. clause 18, wherein the one or more encoding parameters are based on one or more of a motion vector, an intra prediction mode, or a quantizer.
Clause 20: The method of any preceding clause, e.g. clause 18, further comprising determining a rate sensitivity parameter, wherein the one or more encoding parameters are determined based on the rate sensitivity parameter.

It will be apparent to those skilled in the art that various modifications and variations may be made without departing from the scope of the present disclosure. Other embodiments will be apparent to those skilled in the art from consideration of the specification and practices described herein. It is intended that the specification and example figures be considered as exemplary only, with a scope being indicated by the following claims.

## Claims

1. A method comprising:
determining a first frame associated with a first representation comprising first content segments of a content asset;
determining, based on a difference between the first frame and a second frame associated with a second representation comprising second content segments of the content asset, one or more encoding parameters for encoding the second frame, wherein the first content segments differ in segment length from the second content segments;
encoding, based on the one or more encoding parameters, the second frame; and
sending, to a computing device, the second frame.

2. The method of claim 1, wherein determining the one or more encoding parameters comprises determining one or more encoding parameters that minimize decoding errors due to a content transition that causes transitioning at a point other than a segment boundary of the first representation to the second frame of the second representation.

3. The method of any one of claims 1-2, wherein the first frame comprises a plurality of blocks and further comprising partitioning a first block of the plurality of blocks, wherein the second frame is determined based on the partitioned first block.

4. The method of any one of claims 1-3, further comprising determining the difference between the first frame and a second frame based on a rate distortion function that minimizes distortion between frames in different representations.

5. The method of claim 4, wherein the rate distortion function minimizes computational cost associated with minimizing the distortion.

6. The method of any one of claims 1-5, wherein the difference between the first frame and the second frame is based on determining a plurality of reconstructed frames and comparing a first distortion value of a first reconstructed frame with a corresponding distortion value associated with each respective frame of the plurality of reconstructed frames.

7. The method of any one of claims 1-6, further comprising minimizing the difference between the first frame and the second frame, wherein determining the one or more encoding parameters for encoding the second frame is based on minimizing the difference between the first frame and the second frame.

8. The method of any one of claims 1-7, wherein the one or more encoding parameters are based on an encoding type.

9. The method of any one of claims 1-8, wherein the one or more encoding parameters are based on one or more of a motion vector, an intra prediction mode, or a quantizer.

10. The method of any one of claims 1-9, further comprising determining, based on a quality associated with the content asset, a rate sensitivity parameter, wherein the one or more encoding parameters are determined based on the rate sensitivity parameter.

11. The method of any one of claims 1-10, wherein the difference is determined by comparing a source frame used to encode the first frame of the first representation to a reconstructed frame.

12. The method of claim any one of claims 1-11, wherein the computing device comprises a user device configured to decode and cause output of the second frame.

13. A device comprising:
one or more processors; and
memory storing instructions that, when executed by the one or more processors, cause the device to perform the method of any one of claims 1-12.

14. A computer-readable medium storing instructions that, when executed, cause the method of any one of claims 1-12 to be performed.

15. A system comprising:
at least one storage device configured to store a content asset; and
a computing device configured to perform the method of any one of claims 1-12.
